# EUROPÄISCHE PATENTANMELDUNG

(11) **EP 3 393 103 A1**
(43) Veröffentlichungstag der Anmeldung: **24.10.2018**
(21) Anmeldenummer: 17167064.9
(22) Anmeldetag: 19.04.2017
(51) Int. Cl.: H04L 29/08

(54) **STEUERMODUL, SYSTEM ZUR KONFIGURATION, VERFAHREN ZUR ANWENDUNG UND KRAFTFAHRZEUGSTEUEREINHEIT**

(71) Anmelder: Flex Automotive GmbH, 70794 Filderstadt (DE)
(72) Erfinder: Kürner, Rainer, 72581 Dettingen/Erms (DE); Burkhardt, Uwe, 72805 Lichtenstein (DE)
(74) Vertreter: Rupprecht, Kay

(57) **Zusammenfassung**

Die Erfindung betrifft ein Steuermodul (1) zum Einsatz in Kraftfahrzeugen mit einer Mehrzahl an Signaleingängen (20), einer Mehrzahl an Signalausgängen (40) und mit einem Zentralspeicher (10), der mit wenigstens einer Funktionseinheit (51;52) zur Weiterverarbeitung von eingehenden Signalen verbunden ist. Dem wenigstens einen in den Zentralspeicher (10) eingehenden Signal ist eine Signalidentifikationsnummer derart zuordbar, dass das Signal durch die wenigstens eine Funktionseinheit (51;52) identifizierbar und weiterverwendbar ist, wobei die wenigstens eine Funktionseinheit (51;52) modular austauschbar ist. Des Weiteren betrifft die Erfindung ein System zur Konfiguration des Steuermoduls (1), ein Verfahren zur Anwendung des Steuermoduls (1) sowie eine Kraftfahrzeugsteuereinheit mit dem Steuermodul (1).

## Beschreibung

Die Erfindung betrifft ein Steuermodul zum Einsatz in Kraftfahrzeugen gemäß dem Oberbegriff des Anspruchs 1. Des Weiteren betrifft die vorliegende Erfindung ein System zur Konfiguration eines Steuermoduls, ein Verfahren zur Anwendung und eine Kraftfahrzeugsteuereinheit.

Steuermodule werden in Kraftfahrzeugen unter anderem eingesetzt, um Sonderfunktionen nach individuellen, anwendungsspezifischen Bedürfnissen konfigurieren zu können. So werden Steuermodule in Nutzfahrzeugen, wie beispielsweise Polizeiwagen, Feuerwehrfahrzeugen, Taxis, Fahrzeugen für den Behinderten- bzw. Krankentransport oder anderweitig spezialisierten Nutzfahrzeugen eingesetzt. Das Steuermodul ermöglicht hierbei, ein Standard-Kraftfahrzeug derart zu konfigurieren, dass eine oder mehrere Spezialfunktionen bereitgestellt werden können. Hierzu können gegebenenfalls auch zusätzliche Bedienelemente in Verbindung mit dem Steuermodul vorgesehen sein.

Derzeitig verfügbare Steuermodule machen jedoch eine auf den jeweiligen Anwendungsfall speziell ausgerichtete Konfiguration der Spezialfunktionen für jeden einzelnen Anwendungsfall notwendig. Aufgrund der Komplexität verfügbarer Steuermodule muss die anwendungsspezifische Konfiguration von dem Hersteller des Steuermoduls vorgenommen werden. Das Steuermodul wird mit einer fest eingestellten Konfiguration in ein entsprechendes Nutzfahrzeug eingebaut. Eine Adaption durch z.B. den Hersteller des Nutzfahrzeuges ist nicht vorgesehen.

Es ist Aufgabe der vorliegenden Erfindung ein Steuermodul zum Einsatz in Kraftfahrzeugen bereitzustellen, dass eine einfache Handhabung sowie Wartung ermöglicht, einen Anschluss an verschiedene Signalquellen zur Verfügung stellt sowie kostengünstig herzustellen und einfach zu konfigurieren ist. Des Weiteren ist es Aufgabe der Erfindung, ein System zur Konfiguration des Steuermoduls, ein Verfahren zur Anwendung des Steuermoduls sowie eine Kraftfahrzeugsteuereinheit mit einem solchen Steuermodul anzugeben.

Gemäß der vorliegenden Erfindung wird die Aufgabe durch ein Steuermodul zum Einsatz in Kraftfahrzeugen, insbesondere Sonderfahrzeugen, gelöst, mit einer Mehrzahl an Signaleingängen, einer Mehrzahl an Signalausgängen und mit einem Zentralspeicher. Der Zentralspeicher ist mit wenigstens einer Funktionseinheit zur Weiterverarbeitung von eingehenden Signalen verbunden. Des Weiteren ist wenigstens einem in den Zentralspeicher eingehenden Signal eine Signalidentifikationsnummer derart zuordbar, dass das Signal durch die wenigstens eine Funktionseinheit identifizierbar und weiterverwendbar ist. Die wenigstens eine Funktionseinheit ist modular austauschbar.

Unter einem Signal kann insbesondere eine Rückmeldung eines Sensors, eines Tasters wie z.B. einer Funktionstaste, eine Hebelposition oder dergleichen verstanden werden. Der Zentralspeicher ist vorzugsweise dazu geeignet, digitale und/oder analoge Signale zu hinterlegen bzw. zu speichern. So kann anhand des Zentralspeichers zu einem zeitlich späteren Zeitpunkt auf ein in den Zentralspeicher eingegangenes Signal zugegriffen werden. Der Zentralspeicher kann insbesondere als ein Datenspeicher ausgestaltet sein. Im Sinne der vorliegenden Erfindung kann unter einem Signal alternativ auch ein Datensignal bzw. Daten im Allgemeinen verstanden werden. So kann das Steuermodul vorzugsweise sowohl analoge als auch digitale Signale bzw. Datensignale verarbeiten und weiterverwenden.

Erfindungsgemäß ist der Zentralspeicher derart ausgebildet, dass einem eingehenden Signal eine Signalidentifikationsnummer zuordbar ist. Bevorzugter Weise wird einem Signal beim Eingang in den Zentralspeicher eine derartige Identifikationsnummer zugeordnet, sodass das Signal innerhalb des Zentralspeichers von anderen hinterlegten bzw. gespeicherten Signalen eindeutig unterscheidbar ist. Insbesondere im Falle der Ausgestaltung des Zentralspeichers als ein Digitalspeicher ist einem eingehenden Signal eine entsprechende Identifikationsnummer bzw. Signalidentifikationsnummer zuordbar. Somit wird sichergestellt, dass ein Signal auch zu einem späteren Zeitpunkt aus einer Vielzahl von Signalen sicher identifiziert und gelesen werden kann.

Unter einer Funktionseinheit ist im Sinne der vorliegenden Erfindung eine Einheit zu verstehen, die zur Verarbeitung, Weiterverarbeitung, Aufbereitung oder dergleichen eines Signals geeignet ist. Insbesondere ist die wenigstens eine Funktionseinheit derart ausgestaltet, dass sie ein in dem Zentralspeicher hinterlegtes bzw. gespeichertes Signal identifizieren und weiterverarbeiten kann. Die wenigstens eine Funktionseinheit ist hierzu auf zweckmäßige Weise mit dem Zentralspeicher verbunden. So ist ein Signal aus dem Zentralspeicher durch die Funktionseinheit lesbar sowie ein Ergebnis der Funktionseinheit an den Zentralspeicher übermittelbar. Hierzu kann der Zentralspeicher Ausgänge und Eingänge zur Verbindung mit der wenigstens einen Funktionseinheit aufweisen. Insbesondere ist die Funktionseinheit modular bereitstellbar.

Im Kontext der vorliegenden Erfindung kann der Zentralspeicher als ein für alle vorgesehenen Funktionseinheiten vollumfänglich zugänglicher Speicher verstanden werden. Die eindeutige Zuordnung von Signalen zu Funktionseinheiten erfolgt anhand der zu vergebenden Signalidentifikationsnummer. Eine Funktionseinheit kann somit nur diejenigen Signale lesen, die ihr über die Signalidentifikationsnummer zugeordnet sind. Die Funktionseinheit und der Zentralspeicher sind vorzugsweise auf modulare Weise miteinander verbindbar. So kann eine einzelne Funktionseinheit gemäß den anwendungsspezifischen Anforderungen eines speziell auszugestaltenden Nutzfahrzeuges austauschbar bzw. ersetzbar sein.

Nach einer Ausführungsform der vorliegenden Erfindung ist der Zentralspeicher mit einer Mehrzahl an Funktionseinheiten verbunden. Insbesondere weist der Zentralspeicher eine Vielzahl an Eingängen und Ausgängen zur zweckmäßigen Verbindung mit einer Mehrzahl an Funktionseinheiten auf. So kann in einem Sonderfahrzeug bzw. Nutzfahrzeug eine beliebige Anzahl an Sonderfunktionen durch den Einsatz mehrerer Funktionseinheiten bereitgestellt werden. Ein in dem Zentralspeicher hinterlegtes bzw. gespeichertes Signal ist, in Abhängigkeit von der zugeordneten Signalidentifikationsnummer, durch eine Funktionseinheit abrufbar bzw. weiterverarbeitbar. Des Weiteren kann ein Ergebnis einer Funktionseinheit an den Zentralspeicher zurückgespeist bzw. zurückgeführt werden, wobei das Funktionsergebnis über einen Signalausgang des Zentralspeichers zweckmäßig z.B. in eine zentrale Kraftfahrzeugsteuerung oder an eine Sonderfunktion des Nutzfahrzeuges weitergeleitet bzw. übergeben werden kann. So ist anhand des Ergebnisses der wenigstens einen Funktionseinheit beispielsweise eine Sonderfunktion des Nutzfahrzeuges steuerbar.

In einer weiteren Ausführungsform ist das wenigstens eine Signal parallel von mehreren Funktionseinheiten weiterverwendbar. Vorzugsweise kann ein in den Zentralspeicher eingegangenes und mit einer Signalidentifikationsnummer gekennzeichnetes Signal von mehreren Funktionseinheiten abrufbar sein. In diesem Sinne wird der vollumfängliche Zugriff einer jeden Funktionseinheit auf den Zentralspeicher deutlich, wobei jede Funktionseinheit jeweils nur die Signale mit den ihr zugeordneten Signalidentifikationsnummer ausliest bzw. weiterverwendet. Auf diese Weise kann das Signal, z.B. eines Sensors oder eines Tasters oder dergleichen, für eine Vielzahl von Funktionseinheiten (weiter-) verwendbar sein. So ist es beispielsweise möglich, ein zentrales Steuerelement wie eine Funktionstaste derart einzusetzen, dass mehrere Funktionseinheiten das zugehörige Signal nach Eingang in den Zentralspeicher verarbeiten.

In einer weiteren Ausführungsform ist vorgesehen, dass wenigstens einer der Signaleingänge und wenigstens einer der Signalausgänge als eine CAN-, LIN-, USB-, WLAN-, LAN- und/oder Bluetooth-Schnittstelle ausgebildet ist. Insbesondere sind somit in Kraftfahrzeugen standardmäßig verwendete Konfigurationen von Signaleingängen bzw. Signalausgängen für das erfindungsgemäße Steuermodul vorgesehen. So ist eine Vielzahl von z.B. Sensoren in Kombination mit dem erfindungsgemäßen Steuermodul innerhalb eines Kraftfahrzeuges einsetzbar. Die Signaleingänge und/oder Signalausgänge können als analoge und/oder digitale Schnittstellen ausgebildet sein.

Gemäß einer Ausführungsform weisen die Funktionseinheiten jeweils einen Filter auf, sodass ein Signal mit einem Zustandsstatus des Kraftfahrzeuges verknüpfbar ist. Vorzugsweise ist der wenigstens eine Filter der wenigstens einen Funktionseinheit vorgeschaltet. Hierzu kann die wenigstens eine Filtereinheit an einem Signalzugang bzw. Signaleingang der wenigstens einen Funktionseinheit vorgesehen sein. Der wenigstens eine Filter bzw. die wenigstens eine Filtereinheit ist somit zwischen dem Zentralspeicher und der Funktionseinheit vorgesehen. Insbesondere ist es anhand des Filters möglich, den Aufruf bzw. die Weiterverwendung eines in dem Zentralspeicher hinterlegten Signals durch eine Funktionseinheit zusätzlich mit z.B. einem Fahrzeugstatus zu verknüpfen. Des Weiteren ist die Verknüpfung mit anderweitigen Vorbedingungen aus dem Umfeld eines Kraftfahrzeuges anhand des Filters bzw. der Filtereinheit vorstellbar. Mit der wenigstens einen Filterfunktion kann eine Vorbedingung für die Weiterverwendung eines Signals durch eine Funktionseinheit gesetzt werden. So ist anhand der Filterfunktion ein definierter Zustand bestimmbar, in dem ein Signal durch eine Funktionseinheit verwendbar ist bzw. nicht verwendbar ist. In diesem Sinne kann der Filter als ein konfigurierbarer Filter, insbesondere als ein parametrierbarer Filter, vorgesehen sein. So kann eine Vielzahl von Filtern der selben Art für eine Vielzahl von Funktionseinheiten eingesetzt werden, wobei die Filter für die jeweilige, zugeordnete Funktionseinheit spezifisch konfigurierbar sind.

Im Sinne der vorliegenden Erfindung kann der Filter als eine Filtereinheit verstanden werden, die einer Funktionseinheit zugeordnet sein kann. So kann eine Funktionseinheit einen Filter bzw. eine Filtereinheit aufweisen, der/die unabhängig von der Funktionseinheit konfigurierbar bzw. austauschbar ist. Insbesondere ist der Filter bzw. die Filtereinheit jeweils einer Funktionseinheit zugeordnet. Alternativ kann die Filtereinheit in der Funktionseinheit integriert vorliegen.

Des Weiteren kann vorgesehen sein, dass den Signalausgängen des Zentralspeichers Filter bzw. Filtereinheiten vorgeschaltet sind. Einem Signalausgang kann eine Filtereinheit derart zugeordnet sein, dass die Filtereinheit zwischen Zentralspeicher und Signalausgang bzw. Signalausgangsschnittstelle angeordnet ist. Auf diese Weise kann die Aussendung z.B. eines Funktionseinheitsergebnisses aus dem Zentralspeicher von einer Vorbedingung wie einem Fahrzeugzustand oder anderweitigen Referenzen gezielt abhängig gemacht werden. Ein Fahrzeugzustand bzw. Fahrzeugstatus kann beispielsweise eine Temperatur, ein fahrdynamischer Zustand, eine Tastereinstellung oder dergleichen sein.

Im Sinne der vorliegenden Erfindung ist bevorzugter Weise vorgesehen, dass das Steuermodul zur (Weiter-)Verarbeitung von Signalen geeignet ist, um insbesondere Sonderfunktionen eines Nutzfahrzeuges zu steuern. Vorteilhafter Weise kann somit eine effiziente und einfache Modifikation eines standardmäßigen Kraftfahrzeuges zur Erlangung eines zweckmäßigen Nutzfahrzeuges bereitgestellt werden.

Im Kontext der vorliegenden Erfindung kann unter der Verarbeitung von Signalen insbesondere auch die Verarbeitung von Datensignalen in analoger und/oder digitaler Form verstanden werden. So kann die vorliegende Erfindung bzw. können die einzelnen Komponenten der vorliegenden Erfindung dazu geeignet sein, analoge und/oder digitale (Daten-)Signale zu empfangen, in dem Zentralspeicher unter Vergabe einer Signalidentifikationsnummer zu speichern und anhand von Funktionseinheiten derart weiterzuverarbeiten, dass über ein Ergebnis einer Funktionseinheit beispielsweise eine Sonderfunktion des Nutzfahrzeuges steuerbar ist. Hierzu wird das Ergebnis einer Funktionseinheit über den Zentralspeicher und einen Signalausgang des Zentralspeichers zurückgegeben. Der Zentralspeicher wirkt im Sinne der Hinterlegung und Weitergabe von Signalen bzw. Datensignalen als eine Speichereinheit, wobei insbesondere die Funktionseinheiten Zugriff auf alle hinterlegten bzw. gespeicherten Signale haben. Die Auswahl, Selektion bzw. Identifikation eines Signals durch eine Funktionseinheit erfolgt anhand der zugeordneten Signalidentifikationsnummer. So ist einer Funktionseinheit eine Signalidentifikationsnummer bzw. wenigstens ein Teil einer spezifischen Signalidentifikationsnummer derart vorgegeben, dass die Funktionseinheit ein ihr entsprechendes, zugeordnetes Signal aus dem Zentralspeicher identifizieren, selektieren und zur Weiterverarbeitung auslesen kann.

Ein nebengeordneter Aspekt der Erfindung bezieht sich auf ein System zur Konfiguration eines vorstehend dargelegten Steuermoduls. Das System weist wenigstens einen Signaleingang auf, wenigstens einen Signalausgang, eine Anzeigeeinheit, eine grafische Benutzeroberfläche, die auf der Anzeigeeinheit darstellbar ist, und wenigstens ein Eingabegerät. Die Funktionseinheit ist anhand der Benutzeroberfläche durch einzelne Funktionseinheitsbausteine zusammensetzbar. Die Funktionseinheitsbausteine sind in Form von Unterfunktionseinheiten vorgebbar.

Darüber hinaus kann das System eine Diagnoseeinheit aufweisen, die zur Übertragung einer Konfiguration auf das Steuermodul geeignet ist. Insbesondere können der Konfigurationssignaleingang und der Konfigurationssignalausgang des Systems an der Diagnoseeinheit vorgesehen sein. Die Diagnoseeinheit des Systems kann vorzugsweise über eine USB-, WLAN-, LAN-, Bluetooth-Schnittstelle oder dergleichen mit der Anzeigeeinheit und dem Eingabegerät verbindbar sein. Des Weiteren ist vorstellbar, dass das System mit der Anzeigeeinheit und dem Eingabegerät als ein zweckmäßig ausgestalteter Computer bzw. PC vorgesehen sein kann.

Das System ist mit wenigstens einem Konfigurationssignaleingang sowie wenigstens einem Konfigurationssignalausgang versehen, sodass eine zweckmäßige Verbindung zwischen dem System zur Konfiguration und dem zu konfigurierenden Steuermodul herstellbar ist. So ist es möglich, eine Konfiguration anhand der Anzeigeeinheit und der grafischen Benutzeroberfläche mittels des wenigstens einen Eingabegerätes auf vorteilhafte Weise zu adaptieren bzw. anwendungsspezifisch zu modifizieren. Es ist anhand des Systems zur Konfiguration eines Steuermoduls möglich, eine vereinfachte Form der Konfiguration des Steuermoduls bereitzustellen. So kann das Steuermodul nicht nur ausschließlich durch den Hersteller des Steuermoduls, sondern z.B. auch direkt durch den Hersteller des Nutzfahrzeuges auf vorteilhafte Weise angepasst und modifiziert werden.

Die wenigstens eine Funktionseinheit ist anhand der Benutzeroberfläche durch einzelne Funktionseinheitsbausteine zusammensetzbar. Bevorzugter Weise kann das System eine Vielzahl von Funktionseinheitsbausteinen standardmäßig bereitstellen. Die Funktionseinheitsbausteine sind hierbei als Unterfunktionseinheiten ausgestaltet. Diese Unterfunktionseinheiten können beispielsweise einfache Grundrechenarten wie z.B. Addieren, Subtrahieren, Multiplizieren und Dividieren sowie weitere grundlegende Verknüpfungen, wie "and"- und "or"-Verknüpfungen, Integralbildung, Differenzialberechunng und dergleichen, zur Signalverarbeitung darstellen.

Die Funktionseinheitsbausteine sind als Kombinationen von verschiedenen Unterfunktionseinheiten modular einsetzbare bzw. zusammensetzbare Bausteine, um eine gewünschte Funktionseinheit zu erhalten. Bevorzugter Weise ist eine einzelne Funktionseinheit anhand des System beispielsweise per "Click-and-Drop" zusammenstellbar. Auf diese Weise wird es auch den üblichen Verwendern eines Steuermoduls, insbesondere den Nutzfahrzeugherstellern, erleichtert, eine spezifische Konfiguration des Steuermoduls anhand des erfindungsgemäßen Konfigurationssystems vorzunehmen. Die Funktionseinheiten können in diesem Sinne kompliziertere Mechanismen zur Signalverarbeitung darstellen, vorzugsweise zusammengesetzt aus einfacheren Unterfunktionseinheiten. Es kann eine Vielzahl an Unterfunktionseinheiten sowie standardmäßig einsetzbaren Funktionseinheiten durch das erfindungsgemäße System zur Konfiguration des Steuermoduls vorgegeben sein. Dem Anwender des Systems kann die Konfiguration eines Steuermoduls mittels des Systems auf vorteilhafte Weise ermöglicht werden.

Gemäß einer Ausführungsform des erfindungsgemäßen Systems ist eine Mehrzahl von modularen Funktionseinheiten vorgegeben, sodass eine Konfigurationsänderung durch Austausch einzelner Funktionseinheiten, insbesondere durch bereits vom System vorgegebene Funktionseinheiten, möglich ist. Das erfindungsgemäße System wird mit einer Anzahl beliebig einsetzbarer Funktionseinheiten zur bedarfsweisen Konfiguration des Steuermoduls bereitgestellt. Die vorgegebenen Funktionseinheiten können insbesondere aus einzelnen Funktionseinheitsbausteine zusammengesetzt sein. Somit kann der Anwender bereits auf ein Reservoir von Funktionseinheiten bzw. Unterfunktionseinheiten zurückgreifen, ohne grundlegende Programmierkenntnisse der Informatik zur Konfiguration des Steuermoduls bzw. einer Funktionseinheit aufwenden zu müssen. Vielmehr kann der Anwender in beliebiger Form das Steuermodul anhand vorgegebener Funktionseinheiten konfigurieren. Alternativ kann der Anwender eigene Funktionseinheiten aus Funktionseinheitsbausteinen erstellen, um das Steuermodul (vollumfänglich) individuell zu konfigurieren.

In einem weiteren, nebengeordneten Aspekt der Erfindung ist ein Verfahren zur Anwendung eines vorstehend beschriebenen Steuermoduls vorgesehen. Gemäß dem Verfahren ist in einem ersten Schritt das Bereitstellen wenigstens einer programmierbaren Funktionseinheit vorgesehen, die auf den Zentralspeicher zugreift und der wenigstens eine Signalidentifikationsnummer als Funktionseinheitsvorbedingung zugeordnet ist, sodass ein Signal mit einer Signalidentifikationsnummer aus dem Zentralspeicher durch die Funktionseinheit identifizierbar und verwendbar ist. In einem zweiten Schritt erfolgt die Zuordnung einer Signalidentifikationsnummer zu wenigstens einem eingehenden Signal. Gemäß einem dritten Schritt ist der Abgleich der Signalidentifikationsnummer des wenigstens einen eingehenden Signals mit einer vorgegebenen Funktionseinheitsvorbedingung durch die wenigstens eine Funktionseinheit vorgesehen. In einem vierten Schritt erfolgt die Weiterverarbeitung des Signals durch die Funktionseinheit, insbesondere sofern der Abgleich der Signalidentifikationsnummer mit der Funktionseinheitsvorbedingung eine Übereinstimmung ergeben hat. Ein fünfter Schritt weist die Rückführung des Funktionseinheitsergebnisses an den Zentralspeicher auf. In einem sechsten Schritt erfolgt die Ausgabe des Funktionseinheitsergebnisses über den wenigstens einen Signalausgang des Zentralspeichers.

Im Sinne der vorliegenden Erfindung ist anhand des erfindungsgemäßen Verfahrens ein in dem Zentralspeicher eingehendes Signal anhand der zugeordneten Signalidentifikationsnummer stets zuordbar, insbesondere zur jeweiligen Signalquelle zuordbar. Auf diese Weise liegt eine unmittelbare und eindeutige Verknüpfung zwischen z.B. einem Sensor als Signalquelle und einer Funktionseinheit, gekoppelt mit dem Zentralspeicher, vor. Eine einzelne Funktionseinheit kann anhand der Signalidentifikationsnummer einer konkreten Signalquelle zugeordnet werden, wobei der Zentralspeicher als eine Art Sammelspeicher für sämtliche Signale bzw. Datensignale dient.

In einer Ausführungsform ist das wenigstens eine Signal von einer Mehrzahl an Funktionseinheiten weiterverwendbar. Insbesondere kann eine Mehrzahl von Funktionseinheiten derart ausgestaltet sein, dass sie die selbe Signalidentifikationsnummer aus dem Zentralspeicher abrufen bzw. aufrufen, um das zugehörige Signal weiter zu verarbeiten. So kann beispielsweise die Stellung eines Tasters oder der Messwert eines Sensors durch eine Vielzahl von Funktionseinheiten verwendet werden. So kann eine Vielzahl von Sonderfunktionen eines Nutzfahrzeuges anhand der Ergebnisse der Funktionseinheiten auf Basis eines einzelnen Signals bzw. Datensignals gesteuert werden.

Nach einer weiteren Ausführungsform wird die Signalidentifikationsnummer dem wenigstens einen eingehenden Signal in Abhängigkeit von der Signalquelle zugeordnet. Bei Eingang eines Signals in den Zentralspeicher wird somit eine herkunftsabhängige Signalidentifikationsnummer dem Signal zugeordnet. Es ist anhand der herkunftsabhängigen Signalidentifikationsnummer eine eindeutige Zuordnung zwischen der Signalherkunft und der durch die Funktionseinheit erzeugten Ergebnis möglich. Es liegt eine dezidierte Signalverarbeitung im Sinne des erfindungsgemäßen Verfahrens vor. Vorzugsweise ist einer jeden Signalquelle hierbei wenigstens ein eindeutig identifizierbarer Abschnitt der zu vergebenden Signalidentifikationsnummer zugeordnet. Auch im Falle des allgemein für sämtliche Funktionseinheiten frei zugänglichen Zentralspeichers erfolgt auf vorteilhafte Weise eine gezielte Signalzuordnung, Signalweiterleitung und Signalverarbeitung.

Des Weiteren ist es anhand der herkunftsabhängigen Signalidentifikationsnummer auch möglich, einen spezifischen Fahrzeugzustand zu bestimmen. Beispielsweise kann ein Temperatursensor in einer Antriebseinheit des Nutzfahrzeuges von einem Temperatursensor im Innenraum des Nutzfahrzeuges unterschieden werden, um gegebenenfalls Sonderfunktionen des Nutzfahrzeuges gezielt ein- oder abzuschalten. Insbesondere mittels eines der Funktionseinheit vorgeschalteten Filters ist somit ein Fahrzeugzustand eindeutig identifizierbar. Der Filter kann beispielsweise die Weitergabe des Signals aus dem Zentralspeicher an die Funktionseinheit unterbinden, sofern ein gewünschter Fahrzeugzustand nicht vorliegt.

Nach einer weiteren Ausführungsform ist die wenigstens eine bereitgestellte Funktionseinheit durch Ersatz mit einer anderen vorgegebenen Funktionseinheit bedarfsweise austauschbar. Insbesondere sind die Funktionseinheiten im Sinne des erfindungsgemäßen Verfahrens modular austauschbar. Auf vorteilhafte Weise ist somit ein Austausch von Funktionseinheiten möglich, um das erfindungsgemäße Steuermodul zweckmäßig zu adaptieren bzw. zu konfigurieren.

Ein weiterer, nebengeordneter Aspekt der vorliegenden Erfindung bezieht sich auf eine Kraftfahrzeugsteuereinheit mit einem vorstehend beschriebenen Steuermodul. So kann eine Steuereinheit, insbesondere eine zentrale Kraftfahrzeugsteuereinheit, um das erfindungsgemäße Steuermodul ergänzt werden, sodass ein standardmäßiges Kraftfahrzeug in ein zweckmäßig ausgestaltetes Nutzfahrzeug umrüstbar ist. Auf diese Weise kann ein Kraftfahrzeug mit einem Steuermodul gemäß der vorliegenden Erfindung bereitgestellt werden.

In diesem Sinne kann vorgesehen sein, dass die Kraftfahrzeugsteuereinheit das Steuermodul parallel zu einer zentralen, standardmäßigen Steuereinheit eines Kraftfahrzeuges bzw. Nutzfahrzeuges aufweist. Alternativ kann die zentrale bzw. standardmäßige Steuereinheit derart um das erfindungsgemäße Steuermodul ergänzt werden, dass die Ergebnisse der wenigstens einen Funktionseinheit über den Zentralspeicher in die (zentrale) Steuereinheit des Nutzfahrzeuges übergebbar sind.

Die Erfindung wird im Folgenden anhand von Ausführungsbeispielen unter Bezug auf die beigefügte schematische Zeichnung näher erläutert. Weitere Ausführungsformen des erfindungsgemäßen Gegenstandes sollen im Sinne der vorliegenden Erfindung hierdurch nicht ausgeschlossen sein.

Es zeigt schematisch:

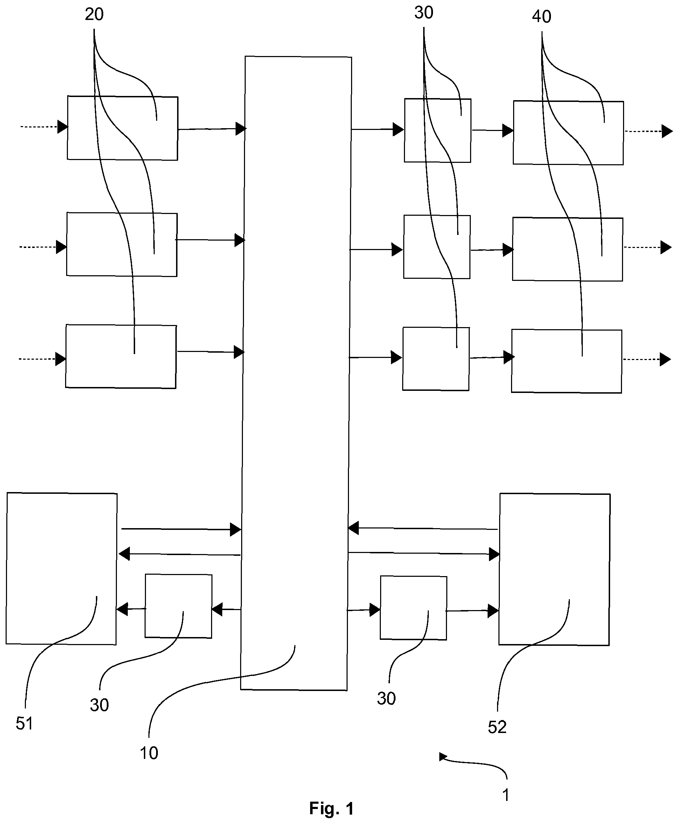

- Fig. 1:: ein strukturelles Ausführungsbeispiel des Steuermoduls zum Einsatz in Nutzfahrzeugen.

In Fig. 1 ist der Aufbau eines Steuermoduls 1 gemäß einem Ausführungsbeispiel dargestellt. Das Steuermodul 1 ist nach Fig.1 mit einem Zentralspeicher 10 ausgestaltet, der drei Signaleingänge 20 und drei Signalausgänge 40 aufweist. Den Signalausgängen 40 ist jeweils ein Filter 30 vorgeschaltet, sodass ein Singal aus dem Zentralspeicher zuerst den zugeordneten Filter 30 des jeweiligen Signalausgangs 40 passieren muss. Auf diese Weise kann ein Signal aus dem Zentralspeicher 10 nur unter vorbestimmten Bedingungen, vorzugsweise in Abhängigkeit von einem Fahrzeugzustand, das Steuermodul über die Signalausgänge 40 verlassen. So ist die Überleitung eines Signals aus dem Zentralspeicher 10 in eine zentrale Steuereinheit eines Fahrzeuges bzw. Nutzfahrzeuges oder zu einer Sonderfunktion des Nutzfahrzeuges gezielt beschränkbar.

Des Weiteren können die Signaleingänge 20 und die Signalausgänge 40 als CAN-, LIN-, USB-, WLAN-, LAN- und/oder Bluetooth-Schnittstellen ausgestaltet sein. Auf diese Weise wird eine hohe Kompatibilität zu den standardmäßigen Schnittstellen innerhalb von Kraftfahrzeugen erzielt. Die Signaleingänge 20 und Signalausgänge 40 können als analoge und/oder digitale Schnittstellen ausgestaltet sein. Darüber hinaus können insbesondere die Signaleingänge 20 bzw. Signaleingangsschnittstellen mit einer ergänzenden Signalaufbereitung bzw. Signalvorbereitung ausgestattet sein. So sind potentielle Störfaktoren, wie z.B. ein Signalrauschen oder dergleichen, vor dem Eingang in den Signalspeicher 10 eliminierbar.

In diesem Sinne werden gemäß Fig. 1 Signale von beispielsweise einem außerhalb des Steuermoduls 1 angeordneten Sensors (vgl. gestrichelte Pfeile) über die Signaleingänge 20 in den Zentralspeicher 10 eingeleitet. Bei Eingang in den Zentralspeicher 10 wird dem wenigstens einen Signal eine Signalidentifikationsnummer zugeordnet. Das Signal bzw. Datensignal wird anschließend in dem Zentralspeicher 10 hinterlegt bzw. gespeichert.

Nach Fig. 1 ist das Steuermodul 1 mit zwei Funktionseinheiten 51; 52 ausgestaltet. Die Funktionseinheiten 51; 52 sind modular mit dem Zentralspeicher 10 verbunden. Die Funktionseinheiten 51; 52 weisen jeweils einen Signalzugang und Signalausgang gegenüber dem Zentralspeicher 10 auf. So kann ein Signal aus dem Zentralspeicher 10 von einer Funktionseinheit 51; 52 abgefragt bzw. aufgerufen werden. Ebenso kann ein Ergebnis von einer Funktionseinheit 51; 52 an den Zentralspeicher übergeben werden. Der Zentralspeicher stellt in diesem Sinne einen vollumfänglich zugänglichen Speicherort dar, innerhalb dessen die Funktionseinheiten 51; 52 auf sämtliche hinterlegten Signale bzw. Daten zugreifen könnten, wobei ein selektiver Zugriff durch die Funktionseinheiten 51; 52 anhand der Signalidentifikationsnummern erfolgt. Die Funktionseinheiten 51; 52 fragen die Daten bzw. Signale zur Weiterverarbeitung insbesondere anhand der eindeutig zugeordneten Signalidentifikationsnummer ab. So erfolgt eine eindeutige und gezielte Abfrage spezifischer Signale durch die jeweiligen Funktionseinheiten 51; 52 zur Signalverarbeitung. Des Weiteren kann ein Ergebnis einer Funktionseinheit 51; 52 in den Zentralspeicher 10 zurückgespeist werden. Anhand der Signalidentifikationsnummer ist ein Signal durch die Funktionseinheit jeweils eindeutig identifizierbar.

Darüber hinaus sind die Funktionseinheiten 51; 52 jeweils mit einem Filter 30 ausgestattet. Insbesondere ist den Funktionseinheiten 51; 52 gemäß Fig. 1 jeweils ein Filter 30 vorgeschaltet. So kann die Verarbeitung eines spezifischen Signals insbesondere von einem Fahrzeugstatus bzw. Fahrzeugzustand, z.B. von einer Temperatur, einem fahrdynamischen Zustand, einer Tastereinstellung oder dergleichen, abhängig gemacht werden. Ist eine solche Vorbedingung gemäß der Konfiguration des jeweiligen Filters 30 nicht erfüllt, kann eine Signalverarbeitung beispielsweise unterbunden werden.

Des Weiteren kann vorgesehen sein, dass wenigstens eine erste Funktionseinheit 51 eine festprogrammierte bzw. festkonfigurierte Funktionseinheit 51 ist, wobei die zweite Funktionseinheit 52 eine konfigurierbare Funktionseinheit 52 ist. So kann z.B. dem jeweiligen Nutzfahrzeughersteller ein beliebiges Maß an Adaptierbarkeit des Steuermoduls 1 überlassen werden. Es können unveränderbare Standardfunktionen für Nutzfahrzeuge bzw. Sonderfahrzeuge in dem Steuermodul neben frei konfigurierbaren Funktionseinheiten vorgesehen sein. Auch kann das Steuermodul auf vorteilhafter Weise hinsichtlich der Funktionseinheiten 51; 52 vollständig modular konfigurierbar sein, z.B. durch einen Nutzfahrzeughersteller oder einen Anwender eines Nutzfahrzeuges. In diesem Fall können gemäß Fig. 1 beide Funktionseinheiten 51; 52 vollumfänglich konfigurierbar vorgesehen sein.

Selbstverständlich kann im Sinne der vorliegenden Erfindung auch vorgesehen sein, dass weitere lokal vorhandene Signale bzw. Daten in den Zentralspeicher einspeisbar sind (in Fig. 1 nicht dargestellt). Es ist vorstellbar, hierzu beispielsweise externe Speichermedien mit dem Zentralspeicher auf zweckmäßige Weise zu verbinden. So können dauerhaft Signale bzw. Daten, unabhängig von Sensoren, Tastern oder dergleichen, in den Zentralspeicher eingespeist werden bzw. vorhanden sein. So ist es auch vorstellbar, spezifische (Vor-)Bedingungen für die Signalverarbeitung durch die Funktionseinheiten 51;52 anhand lokal einzuspeisender bzw. dauerhaft lokal vorhandener (Daten-)Signale festzulegen. Die lokalen Signale bzw. Datensignale können hierzu direkt in den Zentralspeicher einspeisbar sein, wobei vorzugsweise jeweils eine Signalidentifikationsnummer dem jeweiligen Signal bzw. Datensignal zugeordnet wird.

### Bezugszeichenliste

- 1: Steuermodul
- 10: Zentralspeicher
- 20: Signaleingang
- 30: Filter bzw. Filtereinheit
- 40: Signalausgang
- 51, 52: Funktionseinheit

## Patentansprüche

1. Steuermodul (1) zum Einsatz in Kraftfahrzeugen, mit einer Mehrzahl an Signaleingängen (20), einer Mehrzahl an Signalausgängen (40) und mit einem Zentralspeicher (10), der mit wenigstens einer Funktionseinheit (51;52) zur Weiterverarbeitung von eingehenden Signalen verbunden ist,
**dadurch gekennzeichnet, dass**
wenigstens einem in den Zentralspeicher (10) eingehenden Signal eine Signalidentifikationsnummer derart zuordbar ist, dass das Signal durch die wenigstens eine Funktionseinheit (51;52) identifizierbar und weiterverwendbar ist, wobei die wenigstens eine Funktionseinheit (51;52) modular austauschbar ist.

2. Steuermodul nach Anspruch 1,
**dadurch gekennzeichnet, dass**
der Zentralspeicher (10) mit einer Mehrzahl an Funktionseinheiten (51;52) verbunden ist.

3. Steuermodul nach einem der vorhergehenden Ansprüche,
**dadurch gekennzeichnet, dass**
das wenigstens eine Signal parallel von mehreren Funktionseinheiten (51;52) weiterverwendbar ist.

4. Steuermodul nach einem der vorhergehenden Ansprüche,
**dadurch gekennzeichnet, dass**
wenigstens einer der Signaleingänge (20) und wenigstens einer der Signalausgänge (40) als eine CAN-, LIN-, USB-, WLAN-, LAN- oder Bluetooth-Schnittstelle ausgebildet ist.

5. Steuermodul nach einem der vorhergehenden Ansprüche,
**dadurch gekennzeichnet, dass**
die Funktionseinheiten jeweils einen Filter (30) aufweisen, sodass ein Signal mit einem Zustandsstatus des Kraftfahrzeuges verknüpfbar ist.

6. System zur Konfiguration eines Steuermoduls (1) gemäß einem der vorhergehenden Ansprüche, wobei das System folgendes aufweist:
- wenigstens einen Konfigurationssignaleingang,
- wenigstens einen Konfigurationssignalausgang,
- eine Anzeigeeinheit,
- eine grafische Benutzeroberfläche, die auf derAnzeigeeinheit darstellbar ist, und
- wenigstens ein Eingabegerät,
**dadurch gekennzeichnet, dass**
die Funktionseinheit (51;52) anhand der Benutzeroberfläche durch einzelne Funktionseinheitsbausteine zusammensetzbar ist, wobei die Funktionseinheitsbausteine in Form von Unterfunktionseinheiten vorgegeben sind.

7. System nach Anspruch 7,
**dadurch gekennzeichnet, dass**
eine Mehrzahl von modularen Funktionseinheiten (51;52) vorgegeben ist, sodass eine Konfigurationsänderung durch Austausch einzelner Funktionseinheiten (51;52) verfügbar ist.

8. Verfahren zur Anwendung eines Steuermoduls (1) nach einem der vorhergehenden Ansprüche, folgende Schritte aufweisend:
- Bereitstellen wenigstens einer programmierbaren Funktionseinheit (51;52), die auf den Zentralspeicher (10) zugreift und der wenigstens eine Signalidentifikationsnummer als Funktionseinheitsvorbedingung zugeordnet ist, sodass ein Signal mit einer Signalidentifikationsnummer aus dem Zentralspeicher (10) durch die Funktionseinheit (51;52) identifizierbar und verwendbar ist,
- Zuordnung einer Signalidentifikationsnummer zu wenigstens einem eingehenden Signal,
- Abgleich der Signalidentifikationsnummer des wenigstens einen eingehenden Signals mit einer vorgegebenen Funktionseinheitsvorbedingung durch die wenigstens eine Funktionseinheit (51;52),
- Weiterverarbeitung des Signals durch die Funktionseinheit (51;52), sofern der Abgleich der Signalidentifikationsnummer mit der Funktionseinheitsvorbedingung eine Übereinstimmung ergeben hat,
- Rückführung des Funktionseinheitsergebnisses an den Zentralspeicher (10),
- Ausgabe des Funktionseinheitsergebnisses über den wenigstens einen Signalausgang (40) des Zentralspeichers (10).

9. Verfahren nach Anspruch 8,
**dadurch gekennzeichnet, dass**
das wenigstens eine Signal von einer Mehrzahl an Funktionseinheiten (51;52) weiterverwendbar ist.

10. Verfahren nach Anspruch 8 oder 9,
**dadurch gekennzeichnet, dass**
die Signalidentifikationsnummer dem wenigstens einen eingehenden Signal in Abhängigkeit von der Signalquelle zugeordnet wird.

11. Verfahren nach einem der Ansprüche 8 bis 10,
**dadurch gekennzeichnet, dass**
die wenigstens eine bereitgestellte Funktionseinheit (51;52) durch Ersatz mit einer anderen vorgegebenen Funktionseinheit (51;52) bedarfsweise austauschbar ist.

12. Kraftfahrzeugsteuereinheit mit einem Steuermodul (1) nach einem der Ansprüche 1 bis 5.
